# EUROPÄISCHE PATENTSCHRIFT

(11) **EP 1 108 102 B1**
(45) Veröffentlichungstag und Bekanntmachung des Hinweises auf die Patenterteilung: **07.06.2006**
(21) Anmeldenummer: 99953553.7
(22) Anmeldetag: 20.08.1999
(51) Int. Cl.: E05B 49/00

(54) **EIN SICHERHEITSSYSTEM**
SECURITY SYSTEM
SYSTEME DE SECURITE

(30) Priorität: 27.08.1998 AU PP551598; 03.12.1998 AU PP748998; 02.08.1999 AU 4241999
(43) Veröffentlichungstag der Anmeldung: 20.06.2001
(73) Patentinhaber: ROBERT BOSCH GMBH, 70442 Stuttgart (DE)
(72) Erfinder: SCHMITZ, Stephan, D-50672 Köln (DE); CROWHURST, Peter, Rowville, VIC 3178 (AU)
(86) Internationale Anmeldenummer: PCT/DE1999/002619
(87) Internationale Veröffentlichungsnummer: WO 2000/012846

(56) Entgegenhaltungen:
- EP-A- 0 770 749
- EP-A- 0 831 197
- DE-A- 4 020 445

## Beschreibung

Die vorliegende Erfindung bezieht sich auf ein Sicherheitssystem, insbesondere ein passives Sicherheitssystem für Fahrzeuge.

Derzeit existierende passive Sicherheitssysteme für den Zugang und die Aktivierung von Fahrzeugen verwenden fernbetätigte elektronische Schlüssel, die einen Sender einschließen, der Authentifizierungsdaten an einen in dem Fahrzeug befindlichen Empfänger übermittelt, wenn der Schlüssel innerhalb eines vorbestimmten Bereichs des Empfängers ist. Das zwischen dem Sender und dem Empfänger aktivierte Kommunikationsprotokoll benutzt zum Führen der übertragenen Daten eine Radiofrequenz-Schnittstelle. Die Radiofrequenz (RF)-Schnittstelle hat einen begrenzten Bereich, um zu gewährleisten, daß die Kommunikationsverbindung unterbrochen wird, wenn sich eine im Besitz des Schlüssels befindliche Person aus der unmittelbaren Nähe des Fahrzeugs entfernt.

Ein derartiges Sicherheitssystem gemäß dem Oberbegriff des unabhängigen Anspruchs 1 ist beispielsweise aus der EP-A-0 770 749 bekannt.

Passive Sicherheitssysteme sind leicht Angriffen unbefugter Personen ausgesetzt, die Abfangeinrichtungen benutzen, die in die Nähe des Fahrzeugs und des Schlüssels gebracht werden, um die von dem Schlüssel übermittelten Übertragungen zu empfangen und die Übertragungen an das Fahrzeug weiterzuübertragen oder die Übertragungen aufzuzeichnen. Wenn die Übertragungen erst einmal abgefangen worden sind, können sie demoduliert werden, um die übertragenen Daten zu erhalten. Eine unbefugte Person kann einen authentischen Schlüssel von dem Hersteller erwerben und die übertragenen Daten mit dem erworbenen Schlüssel als einem Zweitschlüssel benutzen. Dieser Zweitschlüssel kann dann verwendet werden, um unbefugten Zugang zu erlangen und/oder das Fahrzeug zu benutzen. Es soll mit der vorliegenden Erfindung einSystem vorgestellt werden, welches dieses Problem beseitigt oder welches zumindest eine zweckmäßige Alternative bietet.

Die vorliegende Erfindung betrifft ein Sicherheitssystem, welches einen elektronischen Schlüssel mit einem Sender und einen gesicherten Gegenstand mit einem Empfänger einschließt, worin der Sender und der Empfänger so ausgelegt sind, dass sie miteinander kommunizieren, um Authentifizierungsdaten zu übertragen, wobei der Sender Identifizierungsdaten übermittelt, die für den Schlüssel eindeutig sind, und das Sicherheitssystem so ausgelegt ist, dass es eine Befugnis für den gesicherten Gegenstand bei Übertragung der Authentifizierungsdaten gewährt, wenn die vom Sender übertragenen Identifizierungsdaten den Identifizierungsdaten des Empfängers entsprechen. Das Sicherheitssystem ist dadurch gekennzeichnet, dass die Identifizierungsdaten derart in Hardware einer integrierten Schaltung des Senders eingebettet sind, dass sie nach der Anfertigung von keinem anderen elektronischen Bauelement außer über den Sender lesbar sind.

In einer alternativen Ausgestaltung ist der Empfänger so ausgelegt, dass er die Befugnis gewährt, wenn die vom Sender gesendeten Identifzierungsdaten innerhalb einer zulässigen Zeitperiode erhalten werden und den Identifizierungsdaten des Empfängers entsprechen. Weiterhin sind zur Erteilung der Befugnis der Sender und der Empfänger so ausgelegt sind, dass der Sender die Identifizierungsdaten in einem Anfangskennsatz einer Kommunikationsnachricht zum Empfänger überträgt und der Empfänger den Anfangskennsatz innerhalb einer zulässigen Zeitperiode empfängt. Schließlich ist es vorgesehen, dass zur Erteilung der Befugnis der Schlüssel und der Empfänger so ausgelegt sind, dass der Schlüssel den Anfangskennsatz in einer Antwortnachricht auf eine von dem gesicherten Gegenstand empfangenen Kennungsabfrage übertragt, und der Empfänger mindestens einen Teil der Antwortnachricht innerhalb einer zulässigen Zeitperiode empfängt.

Eine bevorzugte Realisierung der vorliegenden Erfindung ist anschließend mit Bezug auf die beiliegenden Zeichnungen als Beispiel beschrieben, wobei:

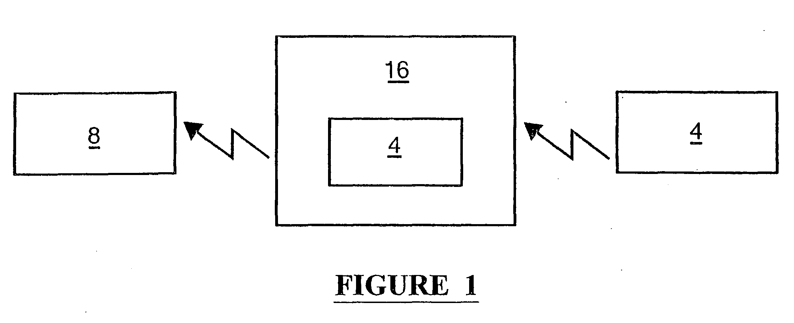

Figur 1 eine schematische Ansicht einer bevorzugten Realisierung eines Sicherheitssystems mit einer Abfangstation ist;
Figur 2 ein Blockdiagramm des Sicherheitssystems ist; und
Figur 3 ein Zeitdiagramm für von dem Sicherheitssystem übermittelte Signale ist.

Ein passives Sicherheitssystem, wie in den Figuren gezeigt, schließt folgende ein:
einen elektronischen Schlüssel 4 mit einem Sender 6 und einer Induktionsspulenantenne 7, eine Basisstation 8 mit einem Empfänger 10 und einer Induktionsspulenantenne 12. Die Basisstation 8 ist an einem gesicherten Ort untergebracht, wie z.B. einem Fahrzeug, und kontrolliert den Zugang zu dem gesicherten Ort und/oder das Starten des Fahrzeugs. Wenn der Schlüssel 4 innerhalb eines bestimmten Bereichs der Antenne 12 des Empfängers 10 herangeführt wird, erregt der Empfänger 10 den Schlüssel 4, und veranlaßt dadurch den Sender 6, die Übermittlung an den Empfänger 10 zu beginnen. Daten werden unter Verwendung von RF-Signalen übermittelt, welche eine Kommunikationsverbindung zwischen dem Schlüssel 4 und der Basisstation 8 herstellen. Die zwischen dem Schlüssel 4 und der Basisstation 8 übermittelten Daten werden durch ein Kommunikationsprotokoll bestimmt, welches der Schlüssel 4 und die Basisstation 8 befolgen, und welches die Übermittlung von Authentifizierungsdaten von dem Schlüssel 4 an den Empfänger 10 beinhaltet. Zugang zu dem gesicherten Ort und/oder Starten des Fahrzeugs wird von der Basisstation 8 nur dann zugelassen, wenn die übermittelten Authentifizierungsdaten mit den von der Basisstation 8 gespeicherten Authentifizierungsdaten übereinstimmen.

Eine Abfangstation 16 schließt einen Empfänger ein, um auch die Übertragungen von dem Schlüssel 4 zu empfangen und alle empfangenen Signale zu speichern oder weiterzuübertragen. Die Station 16 wird benutzt, um die übertragenen Signale zu demodulieren, um eine Kopie der übertragtenen Daten zu erhalten. Die Schlüssel 4 sind Massenteile und entsprechen den von Fahrzeugherstellern vorgegebenen Anforderungen.
Die Schlüssel 4 weisen eine Anzahl von Sicherheitsmerkmalen auf, wie zum Beispiel die übertragenen Authentifizierungsdaten und eine eindeutige spektrale Signatur oder einen charakteristischen Auffangpunkt dritter Ordnung (third order intercept point), wie in der Beschreibung der australischen Patentanmeldung AU-A-199933933 des Antragstellers besprochen. Es ist jedoch möglich, daß ein Unbefugter in der Lage ist, einen der massenproduzierten Schlüssel 4 in seinen Besitz zu bekommen und die mittels der Abfangstation 16 erhaltenen Daten zu benutzen, wobei die Daten einfach an das Fahrzeug weiterübertragen werden können, indem der Sender des erhaltenen unbefugten Schlüssels benutzt wird, oder die Daten können in den unbefugten Schlüssel 4 gespeichert werden, um einen Zweitschlüssel 4 zu erstellen. Der Zweitschlüssel 4 könnte daher dafür benutzt werden, unbefugten Zugang zu einem Fahrzeug und/oder unbefugte Benutzung eines Fahrzeugs zu erzielen. In einem Weiterübertragungs-Angriff (relay attack) wird die Abfangstation dazu benutzt, den Originalschlüssel 4 zu erregen, welcher sich im Haus/Betrieb des Besitzers befinden kann, und dann die empfangenen demodulierten Daten von dem Originalschlüssel 4 zu dem Fahrzeug weiterzuübertragen unter Verwendung des Senders des Zweitschlüssels 4.

Um derartige Vorkommnisse gemäß der nachfolgend beschriebenen bevorzugten Realisierung zu verhindern, werden die Schlüssel 4 alle mit einer eindeutigen Seriennummer hergestellt, die als Identifizierungsdaten in dem Schlüssel 4 eingeschlossen sind. Die Identifizierungsdaten werden in der Maskenkonfiguration einer integrierten Schaltung untergebracht, welche den Sender 6 des Schlüssels 4 einschließt. Die Identifizierungsdaten sind so in der integrierten Schaltung eingeschlossen, daß sie nach der Anfertigung von keinem anderen elektronischen Bauelement gelesen werden können. Der Sender 6 ist auch so ausgelegt, daß wenn der Schlüssel 4 von der Basisstation 8 erregt wird, die Identifizierungsdaten, welche die Seriennummer darstellen, zuerst übertragen werden, bevor der Sender mit der Übertragung irgendwelcher anderer Daten, die ihm geliefert werden, beginnt, wie z.B. die Authentifizierungsdaten. Zum Beispiel wird der Sender 6 alle Daten übertragen, die er von einem Mikrocontroller 35 empfängt, unter Benutzung eines Kommunikationsprotokolls, welches einen Anfangskennsatz einschließt, der als erster übermittelt wird, bevor irgendwelche anderen Daten übertragen werden. Der Sender 6 schließt in dem Anfangskennsatz die Seriennummer des Schlüssels 4 ein. Die Basisstation 8 führt eine Kopie der eindeutigen Seriennummer und wird nur Zugang zu dem Fahrzeug und/oder Benutzung des Fahrzeugs ermöglichen, falls:
(a) die empfangene Seriennummer mit der in der Basisstation 8 gespeicherten Seriennummer übereinstimmt; und
(b) die Basisstation 8 die übertragene Seriennummer innerhalb einer zulässigen Zeitspanne empfängt.

Die zulässige Zeitspanne entspricht der ersten Anfangsperiode, wenn eine Übertragung von dem Schlüssel 4 empfangen wird. Die zulässige Zeitspanne ist so eingestellt, daß sie den Empfang der übertragenen Seriennummer in der Anfangsübertragung erlaubt, ist aber auch kurz genug eingestellt, daß sie die Unterdrückung der Übertragung der eindeutigen Seriennummer des Zweitschlüssels gefolgt von der Übertragung einer von dem Originalschlüssel kopierten Seriennummer erkennt. Dadurch wird sichergestellt, daß Unbefugte keinen Zugang zu dem Fahrzeug erhalten und/oder das Fahrzeug benutzen können, indem kopierte Daten übertragen werden, welche die Seriennummer des kopierten Originalschlüssels einschließen, nachdem die Übertragung der Seriennummer von dem Zweitschlüssel unterdrückt wurde. Durch Verwendung des Kommunikationsprotokolls mit dem die Seriennummer übermittelnden Anfangskennsatz, wird bei einem Weiterübertragungs-Angriff die Abfangstation 16, welche den unbefugten Schlüssel 4 benutzt, zuerst den Anfangskennsatz einschließlich der Seriennummer des unbefugten Schlüssels senden, gefolgt von dem Anfangskennsatz und den von dem Originalschlüssel 4 erhaltenen Daten. Die Übertragung von zwei Anfangskennsätzen, oder in der Tat zwei Seriennummern, wird erkannt. Die zulässige Zeitspanne stimmt daher mit der Zeit überein, die in Anspruch genommen wird, um einen Anfangskennsatz zu übertragen, bevor irgendwelche Daten empfangen werden. Die Struktur des Anfangskennsatzes kann erkannt werden wenn sich eindeutige digitale Speicherworte am Start und Stop eines jeden Anfangskennsatzes befinden. Auch der Anfang der Daten kann erkannt werden, wenn ein eindeutiger Datenvorspann vorhanden ist.

Dementsprechend, durch Erkennung der Anfangskennsätze, wenn die am Empfänger 10 erkannte Anfangskennsatz-Zeitdauer die Länge eines Anfangskennsatzes überschreitet, dann wird der Zugang zu dem Fahrzeug und/oder Benutzung des Fahrzeugs verweigert.

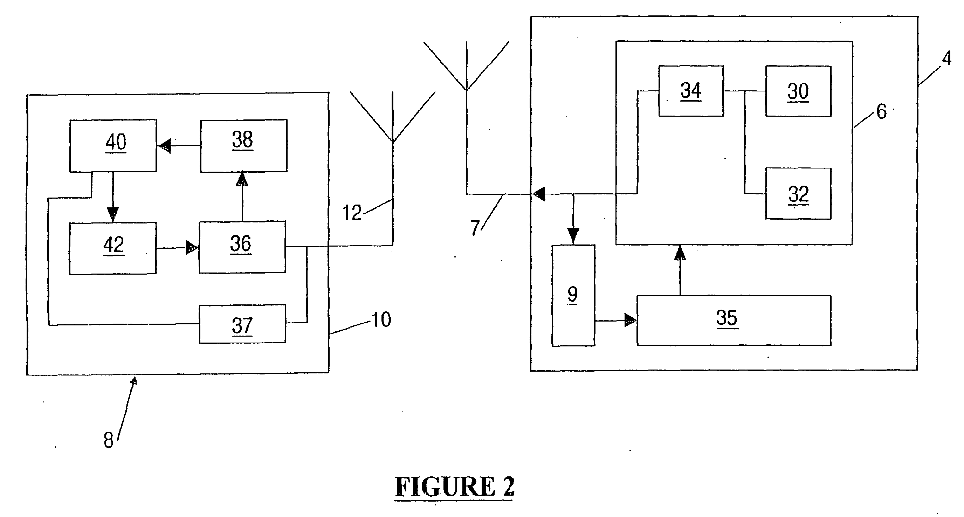

Der Sender 6, wie in Figur 2 gezeigt, beinhaltet eine integrierte Schaltung, die zwei konstante Tonsignale übermittelt, sobald der Schlüssel 4 von dem Empfänger 10 erregt wird. Die Schaltung kann zwei Radiofrequenz-Oszillatoren 30 bzw. 32 für die Töne einschließen, deren Ausgaben in einer Antennenweiche 34 zur Übertragung auf die Antenne 7 des Senders 6 vereinigt werden. Alternativ kann die Schaltung einen komplexen Quadraturmodulator einschließen, der die Erzeugung von zwei Tönen getrennt durch ein Mehrfaches des in dem Empfänger 10 verwendeten Kanalabstands ermöglicht.

Eines der Tonsignale, zum Beispiel das von dem ersten Frequenz-Oszillator 30 erzeugte, wird benutzt, um die Identifizierungsdaten, welche die eindeutige Seriennummer darstellen, zu übermitteln. Der Schlüssel 4 schließt einen Mikrocontroller 35 ein, welcher Daten zur Übertragung an den Sender 6 liefert. Der Sender 6 empfängt die Daten und stellt sie zusammen mit einem Anfangskennsatz einschließlich seiner Seriennummer zur Übertragung an die Basisstation 8 bereit. Der Sender 6 enthält einen Code zum Aufbau eines Anfangskennsatzes and stellt ihn zusammen mit Daten bereit zur Übertragung in Übereinstimmung mit dem Kommunikationsprotokol zwischen dem Schlüssel 4 und der Basisstation 8.

Der Empfänger 10 der Basisstation 8 schließt ein mit der Antenne 12 verbundenes FM Empfangsgerät 36, einen Analog-Digital-Umsetzer 38, einen Mikrocontroller 40 und einen frequenzsynthetisierten lokalen Oszillator 42 ein. Der Mikrocontroller 40 ist zur Steuerung des Frequenzsynthetisators 42 programmiert, sowie zur Verarbeitung von Daten, die von dem A-D-Umsetzer 38 und dem FM-Empfangsgerät 36 empfangen werden. Der Frequenzsynthetisator wird zum Auswählen der Frequenzkanäle verwendet, die von dem FM-Empfänger 36 verarbeitet werden sollen, der eine RSSI-Ausgabe für jeden der vier Kanäle C1 bis C4 erzeugt, wie in der Spezifikation der australischen Patentanmeldung AU-A-199933933 des Antragstellers besprochen. Die RSSI Ausgabe für jeden Kanal wird in den A-D-Umsetzer geleitet zur Umsetzung in ein Binärwort zur Verarbeitung durch den Mikrocontroller 40. Der Mikrocontroller 40 behandelt das Binärwort als spektrale Daten, die für die empfangene Energie in jedem der Kanäle C1 bis C4 repräsentativ ist, und verwendet dann die spektralen Daten zum Vergleich mit einer vorher gespeicherten spektralen Signatur für den Sender 6.

Der FM-Empfänger 36 demoduliert auch die auf einem der Kanäle C2 oder C3 empfangenen Daten, die mit dem Tonsignal übereinstimmen, welches die übertragenen Identifizierungsdaten übermittelt, um irgendeinen Anfangskennsatz mit den Identifizierungsdaten zu erhalten, und er leitet diese an den Mikrocontroller 40 auf einer "Daten-erhalten- Ausgabe" (data received output) weiter. Der Mikrocontroller 40 speichert eine Kopie der eindeutigen Seriennummer des berechtigten Originalschlüssels 4 als Identifizierungsdaten und benutzt diese gespeicherten Daten zum Vergleich mit den übertragenen Identifizierungsdaten.

Das System 2 wird gestartet, indem der Schlüssel 4 innerhalb des vorbestimmten Bereichs der Antenne 12 geführt wird, damit der Schlüssel 4 erregt wird und eine Übertragung der zwei Grundtöne und der eindeutigen Seriennummer verursacht. Die von dem Mikrocontroller 40 empfangenen spektralen Daten und Seriennummer werden dann als spektrale Signatur und Seriennummer des Senders 6 zwecks zukünftigem Vergleich für alle folgenden Kommunikationen zwischen dem Schlüssel 4 und dem Empfänger 10 gespeichert.

Der Schlüssel 4 und die Basisstation 8 führen dann dementsprechend die folgenden Schritte durch, wenn eine Kommunikationsverbindung in der Folge hergestellt wird:
(i) Vor der Übermittlung irgendwelcher Authentifizierungsdaten werden die zwei Grundtöne in den Kanälen C2 und C3 simultan mit der Seriennummer in einem der Kanäle C2 oder C3 übermittelt.
(ii) Der Frequenzsynthetisator 42 wählt die vier Kanäle C1 bis C4 und der FM-Empfänger 36 erzeugt eine RSSI-Ausgabe für jeden der Kanäle und eine "Daten-erhalten-Ausgabe" (data received output) für den Mikrocontroller 40.
(iii) Der Mikrocontroller 40 empfängt und verarbeitet die spektralen Daten, die für die empfangenen Signalpegel für jeden der Kanäle repräsentativ sind, und dies wird mit der gespeicherten spektralen Signatur verglichen.
(iv) Falls eine Abweichung zwischen der spektralen Signatur und den spektralen Daten besteht, die mehr als ±1 % darstellt, veranlaßt der Mikrocontroller 40 die Basisstation 8 dazu, das Authentifizierungsverfahren abzubrechen und Zugang zu dem gesicherten Ort und/oder Benutzung des Fahrzeugs zu verhindern.
(v) Der Mikrocontroller 40 verarbeitet jegliche Signale auf der "Daten-erhalten-Ausgabe" um festzustellen, ob sie einen Anfangskennsatz darstellen und die gespeicherte Seriennummer enthalten. Falls die Daten auf der "Daten-erhalten-Ausgabe" mit der gespeicherten Seriennummer nicht übereinstimmen, oder der Mikrocontroller 40 eine Verzögerung entdeckt, welche die zulässige Zeitspanne zwischen der Durchführung von Schritt (iii) und Empfang von mit den gespeicherten Seriennummerndaten übereinstimmenden Daten überschreitet, verursacht der Mikrocontroller 40 die Basisstation 8, das Authentifizierungsverfahren abzubrechen und den Zugang zu dem gesicherten Ort und/oder Starten des Fahrzeugs zu verwehren. Die Verzögerung entspricht jeder versuchten Verhinderung oder Unterdrückung von Übertragung der Seriennummer, wenn ein Zweitschlüssel 4 anfänglich erregt wird. Genauer gesagt entspricht die Verzögerung dem Empfang von mehr als einem Anfangskennsatz, bevor zu verarbeitende Daten gemäß dem Kommunikationsprotokoll empfangen werden.
(vi) Die Höhe der Abweichung der empfangenen spektralen Daten von der spektralen Signatur wird für nachfolgende Analyse aufgezeichnet, um einen charakteristischen Auffangpunkt dritter Ordnung zu ermitteln, damit die angreifende Station identifiziert werden kann. Jegliche empfangene ungenehmigte Seriennummer eines unbefugten Schlüssels wird auch gespeichert, um den unbefugten Schlüssel zu identifizieren. Die Anzahl der Angriffe kann auch gespeichert werden.
(vii) Wenn die Basisstation 8 in der Folge einen befugten Benutzer entdeckt und befugten Zugang und/oder Start des Fahrzeugs erlaubt, verursacht der Mikrocontroller 40 die Erzeugung eines Warnsignals zur Anzeige, daß ein Angriff unternommen wurde. Das Warnsignal kann in Form einer Wortanzeige, einer Wamlampe oder eines Tonsignals sein, welches an dem gesicherten Ort, d.h. dem Fahrzeug, erzeugt wird.

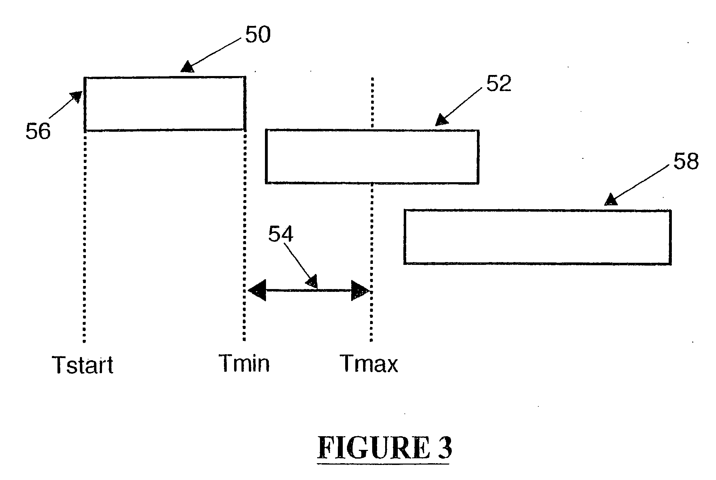

Um den Schlüssel 4 zu erregen, schließt die Basisstation 8 einen FM-Sender 37 ein, welcher die Antenne 12 benutzt, um die Kennungsabfragedaten 50 an den Empfänger 9 des Schlüssels 4 weiterzuleiten. Die Kennungsabfragedaten 50, wie in Figur 3 gezeigt, werden zu einem Zeitpunkt T Start gesandt, zu welchem Zeitpunkt der Empfänger 36 der Basisstation 8 mit der Messung der zulässigen Zeitperiode beginnen kann, innerhalb welcher Zeitperiode die Authentifizierungsdaten von dem Schlüssel 4 her erhalten werden müssen. Der Schlüssel 4 überträgt die Authentifizierungsdaten und die Seriennummer auf einem der verfügbaren Kanäle C2 und C3 in einer Antwortnachricht 52, wie in Figur 3 gezeigt. Die Antwortnachricht 52 wird während oder nach Übertragung der Kennungsabfrage 50 gesandt. Mindestens ein Teil der Antwortnachricht 52 muß von der Basisstation 8 innerhalb eines Abnahmezeitausschnitts 54 zwischen den Zeiten T _{MIN} und T _{MAX} empfangen werden. Die benutzten Frequenzkanäle C2 und C3 werden mittels in der Kennungsabfrage 50 enthaltene Daten ausgewählt. Die Zeit T _{START} entspricht dem Start 56 der Kennungsabfragedaten 50, und die Antwort 52 muß gültig sein und mindestens zum Teil nicht früher als T _{MIN} und nicht später als T _{MAX} empfangen werden. Falls eine Antwort 58 außerhalb des Zeitausschnitts 54 empfangen wird, ist sie automatisch eine ungültige Antwort 58. Der Beginn des Zeitausschnitts 54, T _{MIN} kann bei T _{START} oder während oder nach der Kennungsabfrage 50 oder am Ende der Kennungsabfrage 50, wie in Figur 3 gezeigt, liegen. T _{MAX} liegt ungefähr 1 Millisekunde von T _{MIN}, so daß der Abnahmezeitausschnitt 54 in etwa 1 Millisekunde entspricht. Dies ist besonders vorteilhaft, da jeder unbefugte Benutzer mit einer Angriffsstation 16 mindestens 2 bis 5 Millisekunden braucht, um die Übertragungsfrequenz für die Antwort 52 zu bestimmen, um die Antwort 52 abfangen zu können. Der Zeitausschnitt 54 ist dementsprechend so gelegt, daß er nur gültige Antworten 52 entdeckt und nicht verzögerte ungültige Antworten 58, die von einer Angriffsstation 16 erzeugt werden.

Dem Fachkundigen werden hierzu eine Vielzahl von Abwandlungen gegenwärtig werden, ohne daß der Umfang der vorliegenden Erfindung, wie sie hiermit unter Bezug auf die beiliegenden Zeichnungen beschrieben wird, überschritten wird.

## Patentansprüche

1. Ein Sicherheitssystem, welches einen elektronischen Schlüssel (4) mit einem Sender (6) und einen gesicherten Gegenstand mit einem Empfänger (10) einschließt, worin der Sender (6) und der Empfänger (10) so ausgelegt sind, dass sie miteinander kommunizieren, um Authentifizierungsdaten zu übertragen, wobei der Sender (6) Identifizierungsdaten übermittelt, die für den Schlüssel (4) eindeutig sind, und das Sicherheitssystem so ausgelegt ist, dass es eine Befugnis für den gesicherten Gegenstand bei Übertragung der Authentifizierungsdaten gewährt, wenn die vom Sender (6) übertragenen Identifizierungsdaten den Identifizierungsdaten des Empfängers (10) entsprechen, **dadurch gekennzeichnet, dass** die Identifizierungsdaten derart in Hardware einer integrierten Schaltung des Senders (6) eingebettet sind, dass sie nach der Anfertigung von keinem anderen elektronischen Bauelement außer über den Sender (6) lesbar sind.

2. Ein Sicherheitssystem gemäß Anspruch 1, **dadurch gekennzeichnet, dass** der Empfänger (10) so ausgelegt ist, dass er die Befugnis gewährt, wenn die vom Sender (6) gesendeten Identifzierungsdaten innerhalb einer zulässigen Zeitperiode erhalten werden und den Identifizierungsdaten des Empfängers (10) entsprechen.

3. Ein Sicherheitssystem gemäß Anspruch 2, **dadurch gekennzeichnet, dass** zur Erteilung der Befugnis der Sender (6) und der Empfänger (10) so ausgelegt sind, dass der Sender (6) die Identifizierungsdaten in einem Anfangskennsatz einer Kommunikationsnachricht zum Empfänger (10) überträgt und der Empfänger (10) den Anfangskennsatz innerhalb einer zulässigen Zeitperiode empfängt.

4. Ein Sicherheitssystem gemäß Anspruch 3, **dadurch gekennzeichnet, dass** zur Erteilung der Befugnis der Schlüssel (4) und der Empfänger (10) so ausgelegt sind, dass der Schlüssel (4) den Anfangskennsatz in einer Antwortnachricht (52) auf eine von dem gesicherten Gegenstand empfangenen Kennungsabfrage (50) überträgt, und der Empfänger (10) mindestens einen Teil der Antwortnachricht (52) innerhalb einer zulässigen Zeitperiode empfängt.

5. Ein Sicherheitssystem gemäß Anspruch 4, **dadurch gekennzeichnet, dass** die zulässige Zeitperiode einen Abnahmezeitausschnitt (54) darstellt, der zu einem Übertragungsbeginn (56) der Kennungsabfrage (50) oder zu einer vorbestimmten Zeitperiode ab dem Übertragungsbeginn (56) der Kennungsabfrage (50) beginnt.

6. Ein Sicherheitssystem gemäß Anspruch 5, **dadurch gekennzeichnet, dass** die vorbestimmte Zeitperiode kleiner oder gleich der Länge der Kennungsabfrage (50) ist.

7. Ein Sicherheitssystem gemäß Anspruch 5, **dadurch gekennzeichnet, dass** der Abnahmezeitausschnitt (54) in etwa 1 Millisekunde entspricht.

8. Ein Sicherheitssystem gemäß einem der vorangegangenen Ansprüche, **dadurch gekennzeichnet, dass** der Sender (6) so ausgelegt ist, dass er auf die Identifizierungsdaten Zugriff nimmt und diese überträgt, wenn er eine Übertragung an den Empfänger (10) beginnt.

9. Ein Sicherheitssystem gemäß Anspruch 9, **dadurch gekennzeichnet, dass** die eindeutigen Identifizierungsdaten eine Seriennummer für den Schlüssel (4) darstellen und der Sender (6) so ausgelegt ist, dass er die Identifizierungsdaten automatisch ungeachtet anderer ihm zur Übertragung gelieferter Daten überträgt.

10. Ein Sicherheitssystem gamäß Anspruch 9, **dadurch gekennzeichnet, dass** der Sender (6), der Empfänger (10) und das Sicherheitssystem so ausgelegt sind, dass der Sender (6) ein Tonsignal übermittelt, welches er in spektrale Daten umwandelt, und das Sicherheitssystem Befugnis bei Übertragung der Authentifizierungsdaten gewährt, wenn die spektralen Daten mit der spektralen Signatur des Senders (6) übereinstimmen, und die vom Sender (6) übertragenen Identfizierungsdaten mit den Identifizierungsdaten des Empfängers übereinstimmen und der Empfänger (10) die Identifzierungsdaten in der zulässigen Zeitperiode empfängt.

11. Ein Sicherheitssystem gemäß Anspruch 1, **dadurch gekennzeichnet, dass** die Identifzierungsdaten in der Maskenkonfiguration der integrierten Schaltung untergebracht sind .

## Claims

1. Security system which includes an electronic key (4) having a transmitter (6) and a secured object with a receiver (10), wherein the transmitter (6) and the receiver (10) are configured in such a way that they communicate with one another in order to transmit authentification data, the transmitter (6) transferring identification data which is uniquely defined for the key (4), and the security system is configured in such a way that it grants authority for the secured object when the authentication data is transmitted if the identification data which is transmitted by the transmitter (6) corresponds to the identification data of the receiver (10), **characterized in that** the identification data is embedded in hardware of an integrated circuit of the transmitter (6) in such a way that after it has been produced it cannot be read by any other electronic component except via the transmitter (6).

2. Security system according to Claim 1, **characterized in that** the receiver (10) is configured in such a way that it grants authority if the identification data transmitted by the transmitter (6) is received within a permissible time period and corresponds to the identification data of the receiver (10).

3. Security system according to Claim 2, **characterized in that** in order to issue the authority the transmitter (6) and the receiver (10) are configured in such a way that the transmitter (6) transmits the identification data to the receiver (10) in an initial pass phrase of a communication message and the receiver (10) receives the initial pass phrase within a permissible time period.

4. Security system according to Claim 3, **characterized in that** in order to issue the authority the key (4) and the receiver (10) are configured in such a way that the key (4) transmits the initial pass phrase in a response message (52) to an identifier interrogation (50) received from the secured object, and the receiver (10) receives at least part of the response message (52) within a permissible time period.

5. Security system according to Claim 4, **characterized in that** the permissible time period constitutes an acceptance time period (54) which begins at a start (56) of transmission of the identifier interrogation (50) or at a predetermined time interval from the start (56) of transmission of the identifier interrogation (50).

6. Security system according to Claim 5, **characterized in that** the predetermined time period is less than or equal to the length of the identifier interrogation (50).

7. Security system according to Claim 5, **characterized in that** the acceptance time period (54) corresponds to approximately 1 millisecond.

8. Security system according to one of the preceding claims, **characterized in that** the transmitter (6) is configured in such a way that it accesses the identification data and transmits it when it begins a transmission to the receiver (10).

9. Security system according to Claim 9, **characterized in that** the uniquely defined identification data comprises a serial number for the key (4), and the transmitter (6) is configured in such a way that it automatically transmits the identification data irrespective of other data supplied to it for transmission.

10. Security system according to Claim 9, **characterized in that** the transmitter (6), the receiver (10) and the security system are configured in such a way that the transmitter (6) transfers a sound signal which it converts into spectral data, and the security system grants authority for the transmission of the authentication data if the spectral data corresponds to the spectral signature of the transmitter (6), and the identification data which has been transmitted by the transmitter (6) corresponds to the identification data of the receiver, and the receiver (10) receives the identification data in the permissible time period.

11. Security system according to Claim 1, **characterized in that** the identification data is accommodated in the mask configuration of the integrated circuit.

## Revendications

1. Système de sécurité comprenant une clé électronique (4) équipée d'un émetteur (6) et un objet sécurisé par un récepteur (10), l'émetteur (6) et le récepteur (10) communiquant l'un avec l'autre pour transmettre des données d'identification,
l'émetteur (6) transmettant des données d'identification univoques pour la clé (4) et le système de sécurité est conçu pour qu'il donne une autorisation à l'objet protégé pour transmettre les données d'identification si celles-ci transmises par l'émetteur (6) correspondent aux données d'identification du récepteur (10),
**caractérisé en ce que**
les données d'identification sont installées dans le circuit intégré de l'émetteur (6) pour qu'après fabrication elles ne puissent plus être lues par aucun composant électronique autre que l'émetteur (6).

2. Système de sécurité selon la revendication 1,
**caractérisé en ce que**
le récepteur (10) est conçu pour donner l'autorisation si les données d'identification envoyées par l'émetteur (6) sont reçues dans une fenêtre de temps autorisée et correspondent aux données d'identification du récepteur (10).

3. Système de sécurité selon la revendication 2,
**caractérisé en ce que**
pour donner l'autorisation, l'émetteur (6) et le récepteur (10) sont conçus pour que l'émetteur (6) transmette les données d'identification dans un jeu de données de réception d'une information de communication au récepteur (10) et que le récepteur (10) reçoive le jeu caractéristique de réception dans la fenêtre de temps autorisée.

4. Système de sécurité selon la revendication 3,
**caractérisé en ce que**
la clé (4) et le récepteur (10) sont conçus pour accorder l'autorisation de façon que la clé (4) transmette le jeu de caractéristiques initiales dans un message de réponse (52) à une interrogation de reconnaissance (50) reçue par l'objet protégé et le récepteur (10) reçoit au moins une partie de l'information de réponse (52) dans la fenêtre de temps autorisée.

5. Système de sécurité selon la revendication 4,
**caractérisé en ce que**
la fenêtre de temps autorisée correspond à un segment de temps de réception (54) qui commence au début de la transmission (56) de la requête de reconnaissance (50) ou à une période de temps prédéfinie à partir du début de la transmission (56) de la requête de reconnaissance (50).

6. Système de sécurité selon la revendication 5,
**caractérisé en ce que**
la fenêtre de temps prédéfmie est inférieure ou égale à la durée de la requête de reconnaissance (50).

7. Système de sécurité selon la revendication 5,
**caractérisé en ce que**
la fenêtre de réception (54) correspond environ à 1 milliseconde.

8. Système de sécurité selon l'une des revendications précédentes,
**caractérisé en ce que**
l'émetteur (6) accède aux données d'authentification et les transmet lorsque le récepteur (10) commence à transmettre.

9. Système de sécurité selon la revendication 8,
**caractérisé en ce que**
les données d'identification univoques représentent un numéro de série de la clé (4) et l'émetteur (6) est conçu pour transmette les données d'identification automatiquement, indépendamment d'autres données qui lui ont été fournies pour la transmission.

10. Système de sécurité selon la revendication 9,
**caractérisé en ce que**
l'émetteur (6), le récepteur (10) et le système de sécurité sont conçus pour que l'émetteur (6) transmette un signal sonore qu'il convertit en données spectrales et donne au système de sécurité l'autorisation de transmettre les données d'authentification si les données spectrales correspondent à la signature spectrale de l'émetteur (6) et les données d'identification transmises par l'émetteur (6) correspondent aux données d'identification du récepteur et le récepteur (10) reçoit les données d'identification dans la fenêtre de temps autorisée.

11. Système de sécurité selon la revendication 1,
**caractérisé en ce que**
les données d'identification sont logées dans la configuration de masse du circuit intégré.
